# EUROPEAN PATENT APPLICATION

(11) **EP 2 919 174 A1**
(43) Date of publication of application: **16.09.2015**
(21) Application number: 14159608.0
(22) Date of filing: 13.03.2014
(51) Int. Cl.: G06Q 10/06, G06Q 50/06

(54) **Reservation of a charging point**

(71) Applicant: Audi AG, 85045 Ingolstadt (DE); Atos IT Solutions and Services GmbH, 81739 München (DE)
(72) Inventor: Navarro Matesanz, Roberto, 28915 Madrid (ES); Berner, Nicolas, 85356 Freising (DE)
(74) Representative: Patentanwaltskanzlei WILHELM & BECK

(57) **Abstract**

A charging point is adapted to electrically charge an energy storage of a vehicle. A method for controlling the charging point comprises steps of reserving the charging point with immediate start time, of accepting a reservation request with a start time that lies in the future and, when the start time of the reservation request has come, cancelling the pending reservation of the charging point and reserving the charging point according to the reservation request.

## Description

Present invention concerns the management of a charging point. More specifically, the invention concerns controlling reservations for a charging point.

An electrically propellable vehicle like an electric or hybrid car may recharge its internal storage for electrical energy by means of a charging point. The charging point is usually found next to parking space where the car is parked and electrically connected to the charging point. Electricity is then delivered to the vehicle to recharge the storage. With increased distribution of charging points, using an electrical vehicle has become more attractive.

Typically, there are three different parties involved in running a charging point. An energy supplier supplies the electrical energy that is required for actually charging the vehicle's batteries. Another supplier provides the physical infrastructure that is required for the charging progress, i.e. the physical interface between the car and an electric power line. The parking space itself may also be counted as infrastructure. Third, there is an administrating party for facilitating charging, billing and reservation management. Some of these parties may be represented by one person or organisation.

In order for the three different parties to be interchangeable, there exists an open management protocol called OCPP (Open Charge Point Protocol). OCPP is usually spoken between the infrastructure and a controlling entity like a server, so that a user or potential user of the charging point may log on to the server and manage the charging process of his car.

As of present version 1.5, OCPP supports a reservation that starts immediately (at the time of transaction) and stretches over a predetermined interval into the future. A reservation that starts later in time, say, in two days from the time of making the reservation, is not supported. A user who needs charging services in the future may make a reservation that starts immediately so that the charging point is blocked until the end of the reservation interval. In this case the charging point will be inaccessible to others while no actual charging will be done during that time. Alternatively, a user's reservation may be accepted and forwarded to the charging station just shortly before the interval starts. At this time, however, another user may have occupied the charging station so that the reservation for the first user cannot be put into effect.

It is an object of present invention to provide a method and an apparatus for improved support of a reservation interval that lies in the future. The invention solves these objects through a method, a computer program product and an apparatus with the features according to the independent claims. Dependent claims give preferred embodiments.

A charging point is adapted to electrically charge an energy storage of a vehicle. According to a first aspect of the invention, a method for controlling the charging point comprises steps of reserving the charging point with immediate start time, of accepting a reservation request with a start time that lies in the future and, when the start time of the reservation request has come, cancelling the pending reservation of the charging point and reserving the charging point according to the reservation request.

According to said method it is possible for a customer or user to schedule a charging process that begins in the future where it is guaranteed that the charging point will be available for use when the interval starts. The method may also allow using the charging point during the time until the reservation starts by accepting another reservations that terminates before the first reservation starts. Thus, the charging point's capacity may be better utilized and a reservation that cannot be fulfilled may be avoided.

In one preferred embodiment, a status of the charging point is monitored and the charging point is reserved if the charging point is found to be unreserved. Generally, the charging point is kept in a reserved state all the time. This prevents casual customers from occupying the charging point between reservation intervals of two successive users. The casual customer will be rejected on the basis of a constantly pending "dummy" reservation that is made whenever no user is using the charging point. In order to maintain the charging point in a reserved state at all times, monitoring the status may involve the charging point sending a notification when it is about to exit the reserved state. An external entity, for example a control server, may then request another reservation from the charging point, effective immediately. In another embodiment, the external entity may determine the status of the charging point through polling (regularly requesting the station's status).

In a preferred embodiment, a first cluster of charging points is controlled according to above described method and a second cluster of charging points is not made available to reservations having a start time that lies in the future. By this, reservable charging points maybe distinguished from charging points that are available for occasional customers. Both types of costumers may be served separately and differently. This can make sure that mobility of both user groups is guaranteed.

A charging point may be reassigned from one cluster to the other. This may provide additional flexibility in serving the different kinds of customers. When requirements of the different types of costumers are unbalanced, a broader basis for providing such basic functionality may thus be established. This may also help a user whose reservation request could not be accepted and who is waiting for a free slot at a charging point of the second cluster.

In another embodiment, only predetermined charging points may be reassigned. This may help to indicate the kind of charging service provided by placing the reassignable charging points in a selected area, for example between the charging points of the first and second cluster.

According to another aspect of the invention, a computer program product comprises program code means for carrying out the above described method, when the computer program product is run on a processing unit or stored on a computer readable medium.

According to yet another aspect of the invention, an apparatus for controlling a charging point comprises a first interface to the charging point, a second interface for reservation management and a processing unit adapted to carry out above described method.

Over the second interface, reservation requests and responses to users may be transacted. For instance, a user may log in via the Internet or via a different network and make a request for a reservation that starts in the future. The processing unit may accept the request and hold the reservation until its start time. During this interval, the processing unit may keep a predetermined charging point in a reserved state to prevent casual customers from occupying said charging point. When the start time of the reservation has come, the processing unit may cancel the pending reservation and replace it with the reservation of said user. The processing unit may also be adapted to carry out variants of said method that have been described above or will be described together with implementation examples.

The invention shall now be described in more detail with reference to the accompanying Figures, in which:
- Fig. 1: shows a system for charging electro vehicles;
- Fig. 2: shows states of a charging point of the system of Fig. 1;
- Fig. 3: shows a timing diagram of a communication between a control unit and a charging point in the system of Fig. 1 and
- Fig. 4: shows a flowchart of a method for controlling a charging point in the system of Fig. 1.

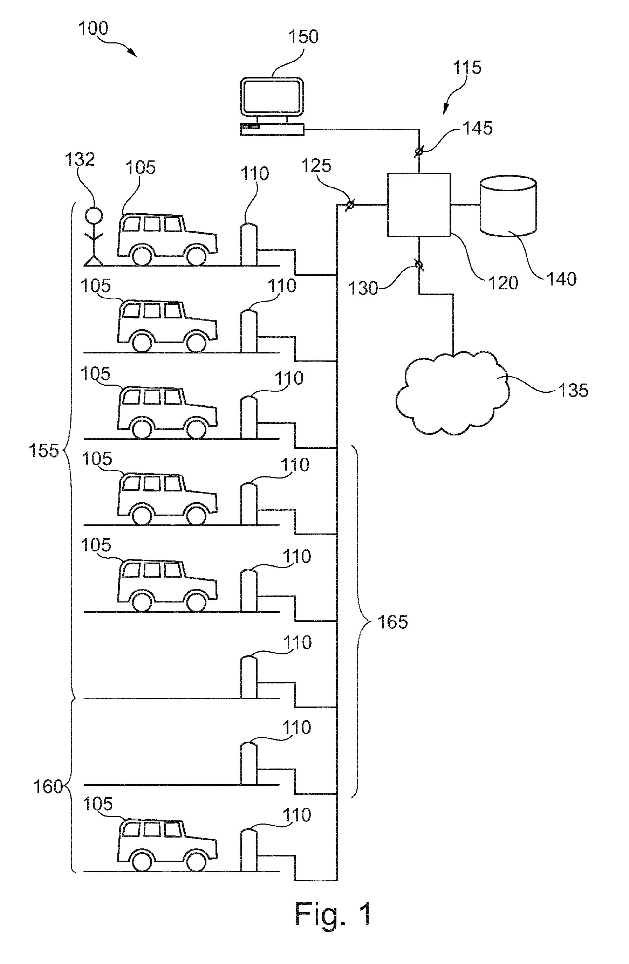

Fig. 1 shows a system 100 for charging electro vehicles 105. The vehicles 105 depicted in Fig. 1 are exemplary in kind, number and position at different charging points 110. For the purposes of the following discussion, an electro vehicle 105 is considered any vehicle with a storage for electrical energy. The storage is generally attached to a propelling system that permits propelling the vehicle 105 with electrical power. In order to charge said energy storage, the vehicle 105 can be brought and electrically connected to a charging point 110. Electrical energy will then be provided to the vehicle 105 through the charging point 110 in order to replenish its electrical energy storage.

The system 100 comprises at least one charging point 110 and a control unit 115. The control unit 115 comprises a processing unit 120 and a first communication interface 125 through which the processing unit 120 is connected to the charging points 110. The preferred protocol for communication over first interface 125 is OCPP (Open Charge Point Protocol), especially in version 1.5 or higher. The control unit 115 also comprises a second interface 130 for communicating with a user 132. This communication may be routed over a network 135. It is preferred that each user 132 is associated to a vehicle 105. The network 135 may comprise a wireless network and/or a part of the internet or a different network. It is preferred that there is also a storage 140 connected to the processing unit 120, the storage 140 being adapted to hold user 132, time and date information. Via an optional third interface 145, the processing unit 120 may be connected to a work place 150 for an administrator.

It is proposed that at least one of the charging points 110 can be controlled by the control unit 115 in such a fashion that a reservation of the charging point 110 with a start time that lies in the future is possible without occupying the charging point 110 between the time of the reservation request and the time the reservation begins.

The charging points 110 that can be controlled this way may be comprised by a first cluster 155. A second cluster 160 may comprise charging points 110 that cannot be reserved this way and are free for casual customers. In one embodiment, a charging point 110 may be reassigned from the first cluster 155 to the second cluster 160 or vice versa. There may be defined a group 165 of charging points 110 that can be reassigned between clusters 155 and 160. The other charging points 110 will then not be reassignable, that is, they will be fixedly assigned to either the first cluster 155 of reservable charging points 110 or the second cluster 160.

Reassigning a charging point 110 may require following certain rules. In one option, reassigning is done manually by an administrator, for instance via the workplace 150. Reassigning may also be done automatically on. A charging point 110 may for instance be automatically assigned from the second cluster 160 to the first cluster 155 if all charging points 110 of the first cluster 155 are occupied by vehicles 105. It may be required that a predetermined number of charging points 110 remain in the second cluster 160 at all times. It may also be required that the charging point 110 is not in use by a vehicle 105 when it is reassigned between clusters 155 and 160. In the case of reassigning a charging point 110 from the first cluster 155 to the second cluster 160, it may be another requirement that there are no pending reservations for that charging point 110.

A charging point 110 may comprise a display or any other means for giving a signal as to which cluster 155, 160 it belongs to. There may also be an indication if the charging point 110 is a member of the group 165.

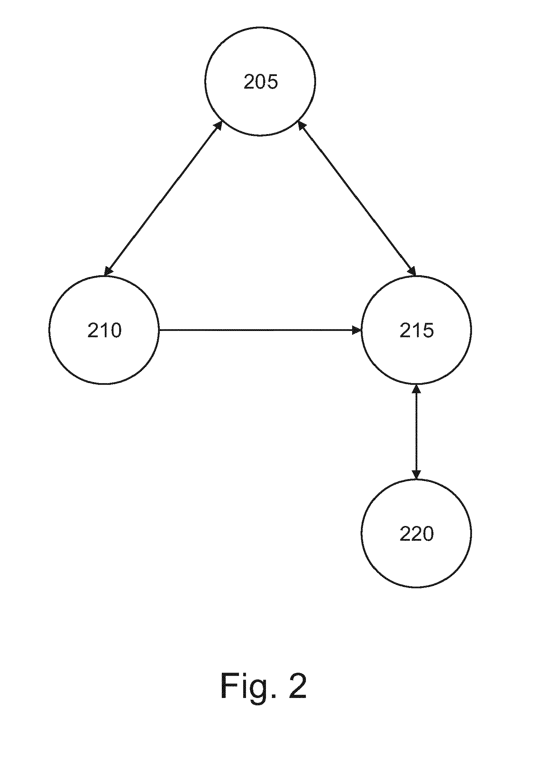

Fig. 2 shows states of a charging point 110 of the system 100 of Fig. 1. Generally, any charging point 110 is always in one of the below described states.

A first state 205 is denoted "free" and corresponds to a charging point 110 that is not reserved and there is no vehicle 105 physically connected to the charging point 110. A second state 210 is denoted "reserved" and corresponds to a charging point 110 that is not physically connected to a vehicle 105 but will refuse service to any other but a predetermined user 132 that is associated with the reservation. A third status 215 is denoted "occupied". When a charging point 110 is in occupied state 215, it is physically connected to a vehicle 105 or the vehicle 105 physically blocks access to the charging point 110 for any other vehicle. However, there may be no power transfer between the charging point 110 and the vehicle 105. A fourth state 220 is denoted "charging" and corresponds to a status where power is transferred between the charging point 110 and the vehicle 105. This requires the physical conditions described above for occupied state 215.

Actual use of the charging point 110 can only be made in the charging state 220. In order to prevent a user 132 from bringing the charging point 110 into the charging state 220, the charging point 110 may be kept in the reserved state 210 by the control unit 115. To this ends, a "dummy" reservation may be made that stretches from the present, that is, from the time the reservation is made, into the future. The reservation may not be assigned to a user 132 or assigned to a user 132 that is associated to the control unit 115 and the reservation may be extended or renewed. It is preferred that the dummy reservation extends for as long as possible into the future so that a need for renewing or extending the dummy reservation is less probable.

As the charging point 110 is reserved, the dummy reservation prevents any casual customer to occupy it and get it to the charging state 220. However, a reservation from a user 132 may be accepted. This reservation may start immediately or in the future. When the time that the reservation begins has come, the dummy reservation may be cancelled by the control unit 115 and be replaced with the reservation of the user 132, starting immediately. This way, a charging point 110 may be kept free from other vehicles 105 or users 132 while the start time of a pending reservation of the first user 132 has not yet come and the user 132 may not experience difficulties parking his vehicle 105 next to the charging point 110 around the start time of his reservation.

When the vehicle 105 is detached from the charging point 110 and the user 132 leaves with the vehicle 105, the control unit 115 may react to this event by requesting another reservation at the charging station 110. This reservation usually begins at the time of the request. Through this approach the charging point 110 may be controlled to effectively accept a reservation that starts in the future without violating a protocol that only supports reservations that start the moment they are requested.

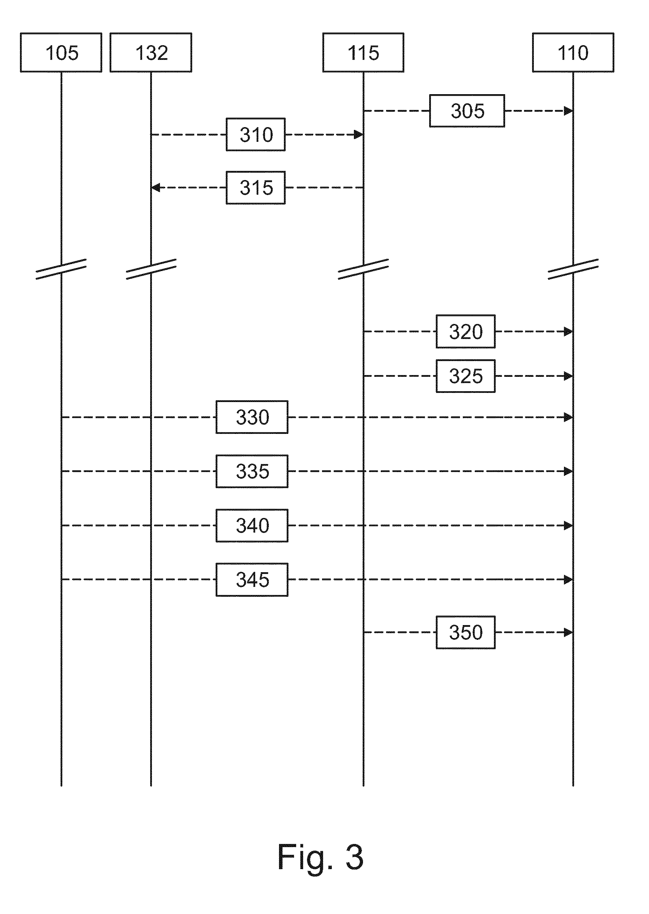

Fig. 3 shows a timing diagram of a method 300, comprising communication between the vehicle 105, the user 132 associated to the vehicle 105, the control unit 115 and a charging point 110 in the system 100 of Fig. 1. In cases where the user 132 belongs to a group of users sharing certain permissions, it is assumed that all users 132 of said group are interchangeable so that modelling of one single user 132 suffices. In a vertical direction time is running from top to bottom (later points in time are further down the illustration).

In a first step 305 control unit 115 makes a "dummy" reservation at charging point 110. In this, the reservation starts at the moment of the request. It is assumed that a corresponding reservation request is answered in the positive by charging station 110 so that from that point on charging station 110 is in reserved state 210.

Later, in a step 310, user 132 communicates, possibly via the network 135, with the control unit 115 and makes a reservation request that may start sometime in the future. In a step 315, the control unit 115 confirms the reservation unless there is a conflict with another reservation that is already pending. Charging point 110 is still in the reserved state 210.

When the start time of the reservation of user 132 has come, the control unit 115 cancels the pending "dummy" reservation in a step 320. Right after that the control unit 115 makes a reservation at charging point 110 on the basis of the reservation of user 132 in step 310. It is preferred that there is as little time as possible between steps 320 and 325 so that the time during which charging point 110 is in the free state 205 is as brief as possible. This is to prevent any casual customer to get charging point 110 into the occupied state 215. Ideally, the dummy reservation is replaced by the reservation based on the request 310 of user 132 so that charging point 110 never leaves the reserved state 210.

After that, vehicle 105 may run up next to the charging point 110 and set it to status occupied 215 in a step 330. In a successive step 335, charging point 110 may be brought into the charging state 220 and charging the vehicle 105 may begin.

When charging is completed or when the reservation window of user 132 comes to an end, charging station 110 may be brought from the charging state 220 to the occupied state 215 in a step 340. Then, in a step 345, the vehicle 105 (and the user 132) may leave and charging point 110 may be brought from occupied state 215 to free state 205. As soon as possible, the control unit 115 reacts on this by sending a reservation request to charging station 110 in a step 350. As the request is accepted, charging station 110 is brought back into reserved state 210. It is preferred that step 350 follows step 345 as quickly as possible. In one embodiment, charging point 110 may send a notification to control unit 115 when it leaves or is about to leave the occupied state 215 for the free state 205. In another embodiment, control unit 115 may poll the status of charging point 110 on a timed or event driven basis.

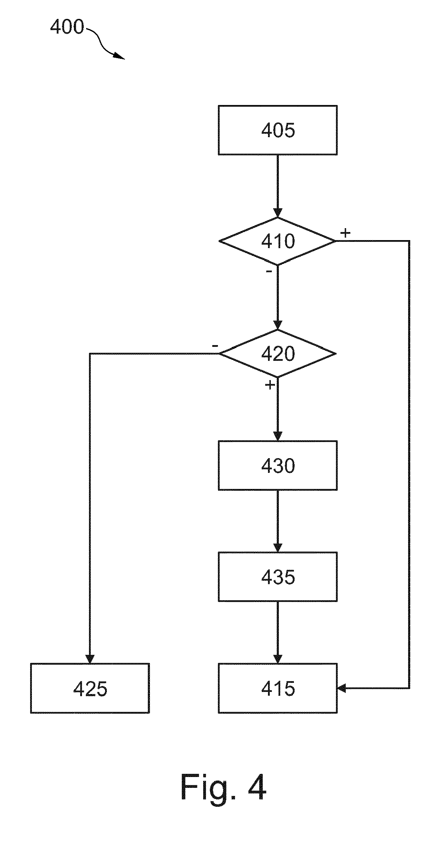

Fig. 4 shows a flowchart of a method 400 for controlling a charging point 110 in the system 100 of Fig. 1. Method 400 is adapted to be run on control unit 115, especially on processing unit 120. The object of method 400 is to reassign a charging point 110 from the second cluster 160 to the first cluster 155 if necessary.

In a first step 405, a reservation request of a user 132 is received. A start time of this reservation may lie in the future. In a step 410 it is determined if there is a "dummy" reservation pending for said charging point 110 at the projected time. If this is the case, the reservation request is accepted in a step 415.

In the negative, a step 420 is executed in which it is determined if there is a charging point 110 that may be reassigned from second cluster 160 to first cluster 155. As mentioned above, such a reassignment may be subject to certain prerequisites. For instance, only a charging point 110 may be reassignable that is member of group 165. Should no charging point 110 be available for reassignment, the reservation request is rejected in a step 425. Otherwise, a reassignable charging point 110 is reassigned to the first cluster 155 in a step 430. Right after that, in a step 435, a "dummy" reservation like in steps 305 and 350 in Fig. 3 is made to get the reassigned charging point 110 into the reserved state 210 as quick as possible to prevent occupation by a casual customer. Then, in a step 415, the reservation request is accepted.

### Reference list

- 100: system
- 105: electro vehicle
- 110: charging point
- 115: control unit
- 120: processing unit
- 125: first interface (to charging point)
- 130: second interface (to network / user)
- 132: user
- 135: network
- 140: storage
- 145: third interface (to administrator)
- 150: administrator workplace

- 155: first cluster (controllable)
- 160: second cluster (for casual customers)
- 165: group of reassignable charging points

- 205: free
- 210: reserved
- 215: occupied
- 220: charging

- 300: timing diagram
- 305: dummy reservation
- 310: reservation request
- 315: reservation confirmation
- 320: cancel dummy reservation
- 325: user reservation
- 330: occupy
- 335: charge
- 340: finished
- 345: leaving
- 350: dummy reservation
- 400: method
- 405: receive reservation request
- 410: charging point dummy-reserved at projected time?
- 415: accept request
- 420: reassignable charging point free?
- 425: reject request
- 430: reassign free charging point to 1st cluster
- 435: dummy-reserve charging point
- 440: accept request

## Claims

1. Method (300, 400) for controlling a charging point (110), the charging point (110) being adapted to electrically charge an energy storage of a vehicle (105), wherein the method comprises steps of:
- reserving (305) the charging point (110) with immediate start time;
- accepting (315) a reservation request (310) with a start time that lies in the future
- when the start time of the reservation request has come:
o cancelling (320) the pending reservation of the charging point (110) and
o reserving (325) the charging point (110) according to the reservation request.

2. Method (300, 400) according to claim 1, furthermore comprising steps of monitoring a status (205-220) of the charging point (110) and reserving (350) the charging point (110) if the charging point (110) is found to be unreserved.

3. Method (300, 400) according to one of the preceding claims, wherein a first cluster (155) of charging points (110) is controlled and a second cluster (160) of charging points (110) is not made available to reservations having a start time that lies in the future.

4. Method (300, 400) according to claim 3, comprising the step of reassigning (430) a charging point (110) from one cluster (160) to the other (155).

5. Method (300, 400) according to claim 4, wherein a charging point (110) from the second cluster (160) is assigned to the first cluster (155) if all charging points (110) of the first cluster (155) are occupied.

6. Method (300, 400) according to claim 5, wherein a predetermined number of charging points (110) is kept in the second cluster (166).

7. Method (300, 400) according to claim 4 or 5, wherein only predetermined (165) charging points (110) may be reassigned.

8. Computer program product comprising program code means for carrying out a method (300, 400) according to one of the above claims when the computer program product is run on a processing unit (120) or stored on a computer readable medium.

9. Apparatus (115) for controlling a charging point (110), the apparatus comprising the following elements:
- a first interface (125) to the charging point (110);
- a second interface (130) for reservation management (15);
- a processing unit (120) adapted to carry out a method (300, 400) according to one of claims 1 to 7.
